# FASCICULE DE BREVET EUROPEEN

(11) **EP 0 696 968 B1**
(45) Date de publication et mention de la délivrance du brevet: **11.11.1998**
(21) Numéro de dépôt: 95912298.7
(22) Date de dépôt: 10.03.1995
(51) Int. Cl.: B60H 1/00

(54) **PROCEDE DE CLIMATISATION DE VEHICULE AVEC BOUCLE DE CHAUFFAGE**
VERFAHREN UND KRAFTFAHRZEUGKLIMAANLAGE MIT HEIZKREISLAUF
VEHICLE AIR CONDITIONING METHOD USING A HEATING LOOP

(30) Priorité: 10.03.1994 FR 9402793
(43) Date de publication de la demande: 21.02.1996
(73) Titulaire: VALEO CLIMATISATION, 78321 La Verrière (FR)
(72) Inventeur: KARL, Stefan, F-75015 Paris (FR)
(74) Mandataire: Gamonal, Didier
(86) Numéro de dépôt international: FR9500282
(87) Numéro de publication internationale: WO9524324

(56) Documents cités:
- EP-A- 0 197 839
- EP-A- 0 199 187
- DE-A- 3 318 025
- DE-A- 3 635 353

## Description

L'invention concerne un procédé pour modifier la température d'un flux d'air à envoyer dans l'habitacle d'un véhicule, par échange de chaleur avec un évaporateur dans lequel circule un fluide qui passe également dans un compresseur et dans un détendeur, ce procédé comportant un mode de refroidissement du flux d'air dans lequel on fait circuler ledit fluide successivement dans l'évaporateur, dans le compresseur, dans un condenseur où il cède de la chaleur à un autre milieu et dans un détendeur.

Un tel procédé est utilisé de façon classique pour la climatisation de l'habitacle du véhicule, notamment d'un véhicule à moteur thermique.

Lorsqu'il s'agit de réchauffer l'air à envoyer dans l'habitacle, on utilise habituellement la chaleur produite par le moteur thermique, par exemple en faisant passer le flux d'air en contact avec un radiateur de chauffage traversé par un fluide de refroidissement du moteur.

Lorsque le moteur est froid, on ne peut en tirer de la chaleur pour le chauffage de l'habitacle, ce qui retarde le moment ou celui-ci se trouve à la température souhaitée et nuit donc au confort des occupants.

Pour accélérer la mise en température de l'habitacle, on peut avoir recours à des dispositifs supplémentaires comportant notamment des brûleurs ou des radiateurs électriques, qui impliquent des investissements importants.

Il est également connu par le document EP-A-197 839 ou DE-A-3 318 025 un procédé pour modifier la température d'un flux d'air à envoyer dans l'habitacle qui comporte également un fluide frigorigène circulant dans un circuit comportant notamment un compresseur, un condenseur, un détendeur et un évaporateur.

D'après ces documents, le procédé de chauffage du flux d'air destiné à être envoyé dans l'habitacle, consiste à dévier tout ou partie du fluide frigorigène pour l'injecter dans l'évaporateur de manière à réchauffer le flux d'air traversant cet évaporateur.

Le but de l'invention est de permettre d'obtenir un autre moyen de chauffage rapide de l'habitacle lorsque le moteur thermique est froid.

L'invention vise notamment un procédé du genre défini en introduction, et est caractérisé en ce qu'il comporte un mode de réchauffage du flux d'air dans lequel on envoie le fluide sortant du compresseur à l'évaporateur, sans passer par un condenseur, puis à lui faire traverser le détendeur avant d'être dirigé vers l'entrée du compresseur et en ce que le détendeur comporte des réglages permettant au fluide de rester à l'état gazeux à la sortie dudit détendeur.

Le mode de réchauffage, utilisable pour le chauffage de l'habitacle lorsque le moteur est froid, utilise ainsi l'installation de climatisation existant, avec des modifications mineures.

D'autres caractéristiques, complémentaires ou alternatives, de l'invention sont énoncées ci-après.
- Le fluide traverse des détendeurs différents dans les deux modes.
- L'évaporateur joue le rôle d'évaporateur dans le mode de refroidissement et joue seulement le rôle d'échangeur de chaleur dans le mode de réchauffage.
- Le véhicule est à moteur thermique et on utilise le mode de réchauffage pour le chauffage de l'habitacle dans les période où la chaleur fournie par le moteur est insuffisante à cet effet.

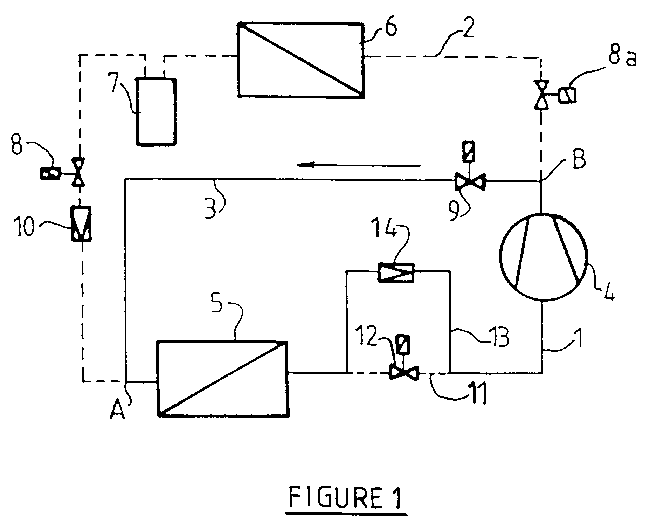

Les caractéristiques et avantages de l'invention seront exposés plus en détail dans la description ci-après, en se référant à la figure 1 qui est un schéma de circuit de fluide selon l'invention, pour la climatisation et le chauffage de l'habitacle d'un véhicule.

Dans ce circuit circule un fluide propre à passer de l'état liquide à l'état gazeux en absorbant de la chaleur, et de l'état gazeux à l'état liquide en cédant de la chaleur, comme c'est le cas de façon habituelle dans les installations de climatisation de véhicules. Les composants de ce circuit sont également rencontrés de façon habituelle dans cette même installation de climatisation.

Le circuit illustré à la figure unique comprend trois branches 1, 2 et 3 se raccordant entre elles en deux points de jonction A et B, les branches 1 et 3 étant représentées en trait plein et la branche 2 en trait interrompu. La branche 1 contient un compresseur 4 qui y fait circuler le fluide du point A vers le point B, et un évaporateur 5 placé en amont du compresseur. La branche 2 contient, du point B vers le point A, une électrovanne amont 8a, un condenseur 6, une bouteille 7 et une électrovanne aval 8. Une électrovanne d'arrêt 9 est également disposée dans la branche 3.

Dans le circuit de cette figure, un détendeur l0 est placé en aval de l'électrovanne 8 dans la branche 2. La branche 1, entre l'évaporateur 5 et le compresseur 4, est subdivisée en deux sous-branches en parallèle, à savoir une sous-branche 11 contenant une troisième électrovanne 12 et une sous-branche 13 contenant un second détendeur 14. Les électrovannes 8, 8a et 12 sont commandées conjointement, et en opposition par rapport à l'électrovanne 9. Lorsque les vannes 8, 8a et 12 sont ouvertes et la vanne 9 fermée, le fluide circule dans une boucle fermée formée par les branches 1, y compris la sous-branche 11 et 2, et ne circule pas dans la branche 3 ni dans la sous-branche 13. Cette boucle fonctionne comme un circuit classique de climatisation, le fluide passant de l'état liquide à l'état gazeux dans l'évaporateur 5 en absorbant de la chaleur du flux d'air et passant de l'état gazeux à l'état liquide dans le condenseur 6 en cédant de la chaleur. La chaleur absorbée dans l'évaporateur 5 peut être prélevée, directement ou indirectement, du flux d'air qui est envoyé dans l'habitacle du véhicule.

Lorsque les vannes 8, 8a et 12 sont fermées et la vanne 9 ouverte, le fluide circule dans une boucle fermée constituée par les branches 1, y compris la sous-branche 13, et 3, et ne circule pas dans la branche 2 ni dans la sous-branche 11, comme indiqué par le trait interrompu sur la figure. Le fluide traverse donc le compresseur 4, l'évaporateur 5 et le détendeur 14. Ne traversant plus le condenseur, il reste en permanence à l'état gazeux et le détendeur 14 est réglé de telle manière que le fluide frigorigène en sortie de ce détendeur soit toujours à l'état gazeux, ces réglages étant réalisés à partir de paramètres tels que la pression et la température du fluide.

L'évaporateur 5 ne joue donc plus le rôle d'évaporateur, mais continue de jouer le rôle d'échangeur de chaleur, permettant de dissiper une grande partie de la chaleur produite par la compression du fluide dans le compresseur 4, cette chaleur pouvant être utilisée pour le chauffage de l'habitacle lorsque le moteur thermique du véhicule est froid. En particulier, le fluide en circulation étant à une température supérieure à la température ambiante, un flux d'air à envoyer dans l'habitacle peut être chauffé directement au contact de l'évaporateur. La présence des deux électrovannes 8a et 8 au lieu d'une seule permet d'isoler le condenseur et d'éviter des transferts de fluide parasites par suite des changements de volume du fluide qu'il contient. L'ensemble des vannes 8a et 9 peut être remplacé par une vanne à trois voies.

## Revendications

1. Procédé pour modifier la température d'un flux d'air à envoyer dans l'habitacle d'un véhicule, par échange de chaleur avec un évaporateur (5) dans lequel circule un fluide qui passe également dans un compresseur (4) et dans un détendeur (10,14,), ce procédé comportant un mode de refroidissement du flux d'air dans lequel on fait circuler ledit fluide successivement dans l'évaporateur (5), dans le compresseur (4), dans un condenseur (6) où il cède de la chaleur à un autre milieu et dans un détendeur (10), caractérisé en ce qu'il comporte un mode de réchauffage du flux d'air dans lequel on envoie le fluide sortant du compresseur à l'évaporateur, sans passer par un condenseur, puis à lui faire traverser le détendeur (14) avant d'être dirigé vers l'entrée du compresseur (4) et en ce le détendeur (14) comporte des réglages permettant au fluide de rester à l'état gazeux à la sortie dudit détendeur.

2. Procédé selon la revendication 1, caractérisé en ce que le fluide traverse des détendeurs différents (10,14) dans les deux modes.

3. Procédé selon l'une des revendications précédentes, caractérisé en ce que l'évaporateur (5) joue le rôle d'évaporateur dans le mode de refroidissement et joue seulement le rôle d'échangeur de chaleur dans le mode de réchauffage.

4. Procédé selon l'une des revendications précédentes, caractérisé en ce que le véhicule est à moteur thermique et qu'on utilise le mode de réchauffage pour le chauffage de l'habitacle dans les périodes où la chaleur fournie par le moteur est insuffisante à cet effet.

## Claims

1. A method for modifying the temperature of a stream of air for delivery into the cabin of a vehicle, by exchange of heat with an evaporator (5) in which there flows a fluid which also passes through a compressor (4) and through an expansion device (10, 14), the method comprising a mode of cooling the stream of air in which the said fluid is caused to flow in succession through the evaporator (5), the compressor (4), a condenser (6) in which it yields heat to another medium, and an expansion device (10), characterised in that it includes a mode of heating the stream of air, in which the fluid leaving the compressor is delivered to the evaporator without passing through a condenser, and is then caused to pass through the expansion device (14) before being directed to the inlet of the compressor (4), and in that the expansion device (14) has adjustments enabling the fluid to remain in the gaseous state at the outlet of the said expansion device.

2. A method according to Claim 1, characterised in that the fluid passes through different expansion devices (10, 14) in the two modes.

3. A method according to one of the preceding Claims, characterised in that the evaporator (5) acts as an evaporator in the cooling mode and acts only as a heat exchanger in the heating mode.

4. A method according to one of the preceding Claims, characterised in that the vehicle has a heat engine, and in that the heating mode is used for heating the cabin in those periods in which the heat supplied by the engine is insufficient for that purpose.

## Patentansprüche

1. Verfahren zur Veränderung der Temperatur eines Luftstroms, der in den Fahrgastraum eines Fahrzeugs einzuleiten ist, durch Wärmeaustausch mit einem Verdampfer (5), in dem ein Fluid zirkuliert, das auch in einen Kompressor (4) und in ein Druckminderventil (10, 14) strömt, wobei dieses Verfahren eine Betriebsart zur Kühlung des Luftstroms umfaßt, in der das besagte Fluid nacheinander in den Verdampfer (5), in den Kompressor (4), in einen Kondesator (6), in dem es Wärme an ein anderes Medium abgibt, und in ein Druckminderventil (10) geleitet wird , **dadurch gekennzeichnet,** daß es eine Betriebsart zur Erwärmung des Luftstroms umfaßt, in der der aus dem Kompressor kommende Luftstrom zum Verdampfer geleitet wird, ohne durch einen Kondensator zu strömen, woraufhin er durch das Druckminderventil (14) strömt, bevor er zum Einlaß des Kompressors (4) gerichtet wird, und daß das Druckminderventil (14) Einstellungen umfaßt, die es dem Fluid ermöglichen, am Auslaß des besagten Druckminderventils im gasförmigen Zustand zu bleiben.

2. Verfahren nach Anspruch 1 , **dadurch gekennzeichnet,** daß das Fluid in den beiden Betriebsarten durch verschiedene Druckminderventile (10, 14) strömt.

3. Verfahren nach einem der vorangehenden Ansprüche, **dadurch gekennzeichnet,** daß der Verdampfer (5) im Kühlbetrieb als Verdampfer wirkt und im Erwärmungsbetrieb nur als Wärmetauscher arbeitet.

4. Verfahren nach einem der vorangehenden Ansprüche, **dadurch gekennzeichnet,** daß das Fahrzeug ein Fahrzeug mit Verbrennungsmotor ist und daß der Erwärmungsbetrieb zur Beheizung des Fahrgastraums in den Zeiträumen verwendet wird, in denen die durch den Motor gelieferte Wärme zu diesem Zweck nicht ausreichend ist.
